# EUROPEAN PATENT APPLICATION

(11) **EP 4 831 949 A2**
(43) Date of publication of application: **28.10.2026**
(21) Application number: 26205176.6
(22) Date of filing: 16.01.2015
(51) Int. Cl.: G07F 17/32

(54) **CARD GAME MONITORING SYSTEM**

(30) Priority: 17.01.2014 AU 2014200314
(62) Document number(s) of the earlier application(s) in accordance with Art. 76 EPC: 21158726.6 / 3 846 141; 15701853.2 / 3 078 008
(71) Applicant: Angel Playing Cards Co., Ltd., Shiga 527-0232 (JP)
(72) Inventor: SHIGETA, Yasushi, Higashiomi-shi, Shiga, 527-0232 (JP)
(74) Representative: Bardehle Pagenberg Partnerschaft mbB Patentanwälte Rechtsanwälte

(57) **Abstract**

The present invention aims to provide a table game monitoring system with which it is possible to allow casinos to stop an ongoing game immediately when something unexpected happens by administrating the whole game from the start to the end of the game and during payoffs.

The card game monitoring system has: a game table (1) on which bettors (2) put wagers (3) on betting areas (4); and a card shooter apparatus has a card reading unit to read and record the number (rank) and suit of the cards (6); and a control unit (7) to determine a winning hand according to a table game rules based on information of numbers (ranks) and suits of the cards sequentially read by the card reading unit (5); a monitor video camera system (8) to capture positions of cards and to identify wagers (3) on each betting area (4) at the game table (1); the control unit (10) has further processing function to check whether wagers (3) with payoff (3W) move to a pool (12) of the winner (W) of the bettors (2) determined by the card shooter apparatus (5) at the end of each game.

## Description

### [Technical Field]

The present invention relates to a table game monitoring system for a table game using playing cards from a shoe having multiple decks that have been shuffled together prior to the beginning of play in which bettors make wagers on betting areas of a game table in front of the bettors. This table game monitoring system monitors whether or not wagers of winning bettor(s) move to appropriate area of the winner(s).

### [Background Art]

Baccarat and Black Jack are of the many live table games played in casinos or gaming establishments. These games use a standard deck of 52 playing cards and are usually dealt from a shoe having multiple decks (6 to 9 or 10 decks) that have been shuffled together prior to the beginning of play. When operating people (hereinafter "the dealer") in casinos deliver playing cards to a game table for plays in such games, any loss of cards or exchange of cards between bettors, etc. should not occur, and also wagers with payoffs must correctly go to the winners of the bettors after each game has ended.

To assure fair games by preventing such loss or exchanges during games, the game tables in casinos should be administrated so that games at tables are played properly (i.e. there is no exchange of cards or any other accidental or fraudulent acts etc.) and wagers are correctly paid off to the winners. A system to monitor the game tables by camera is known and is disclosed in Patent Literature 1: (US Patent 6,582,301). This known system only monitors the table game and records whole games for later analysis if it is believed that some inappropriate act has occurred.

### [Citation List]

### [Patent Literature]

[PTL 1] US 6,582,301B

### [Summary of Invention]

### [Technical Problem]

The present invention provides a real-time monitoring of the table game and enables the casino to stop an ongoing game immediately when something unexpected happens by administrating the whole game from the start to the end of the game.

The present invention has been made in view of the above problem, and aims to provide a table game monitoring system with which it is possible to allow a casino to stop an ongoing game immediately when something unexpected happens by administrating the whole game from the start to the end of the game and during payoffs.

### [Solution to Problem]

To solve the above conventional problems, the present invention provides the card game monitoring system having: a game table on which bettors make wagers on betting areas, a card shooter apparatus that is put on the game table and has a card reading unit that reads the number (rank) of the card and having a control unit to determine a winning hand according to a table game rules based on information of numbers of the cards sequentially read by the card reading unit and a monitor video camera system to capture positions of the card delivered from the card shooter apparatus to bettors and identify wagers on each betting area at the game table, the control unit has a processing function using the information of the monitor video camera system to determine: 1) head-count of the bettors playing each game by identifying the wagers on each betting area or cards delivered to bettors, 2) whether or not each bettor gets more than two cards from the card shooter apparatus, 3) each hand of the bettors and the dealer according to the information read by the card shooter apparatus using the information of head-count of the bettors according to the game rule, and 4) the winner(s) having the winning hand(s) in the game according to the game rule based on the information of the each hand of the bettors and the dealer, wherein the monitor video camera system further reads movements of wagers on the game table, and the control unit having further processing function to check whether wagers with payoffs move to the winner of the bettor determined by the card shooter apparatus at the end of each game.

In the card game monitoring system, the control unit has further processing function to identify ranks of playing cards on the game table delivered by a dealer and to check and report whether ranks of cards are the same as the ones determined by the card shooter apparatus.

### [Brief Description of Drawings]

[Fig. 1]

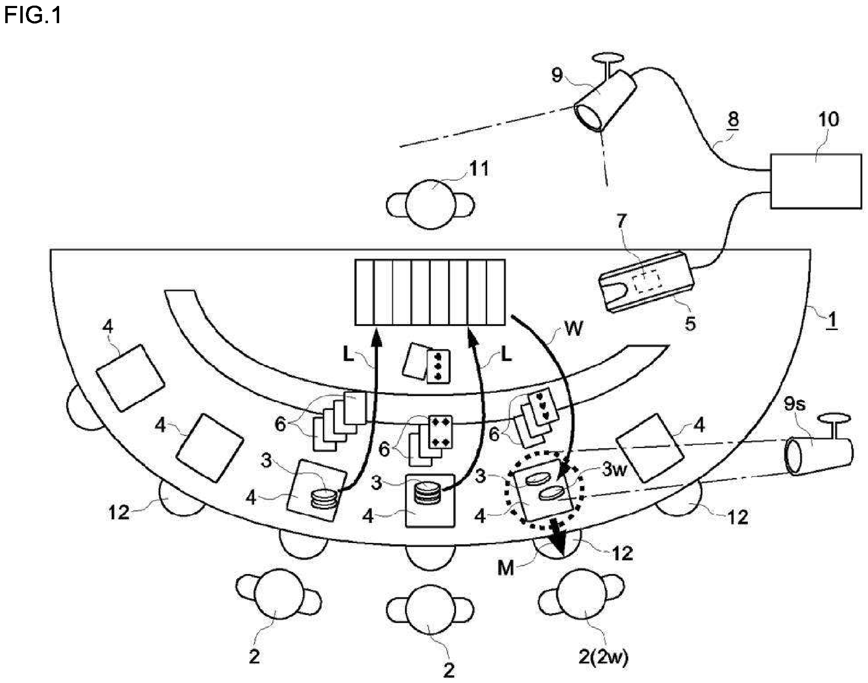

   Fig. 1 is a diagram schematically showing the entirety of a table game system according to an embodiment 1 of the present invention.
[Fig. 2]

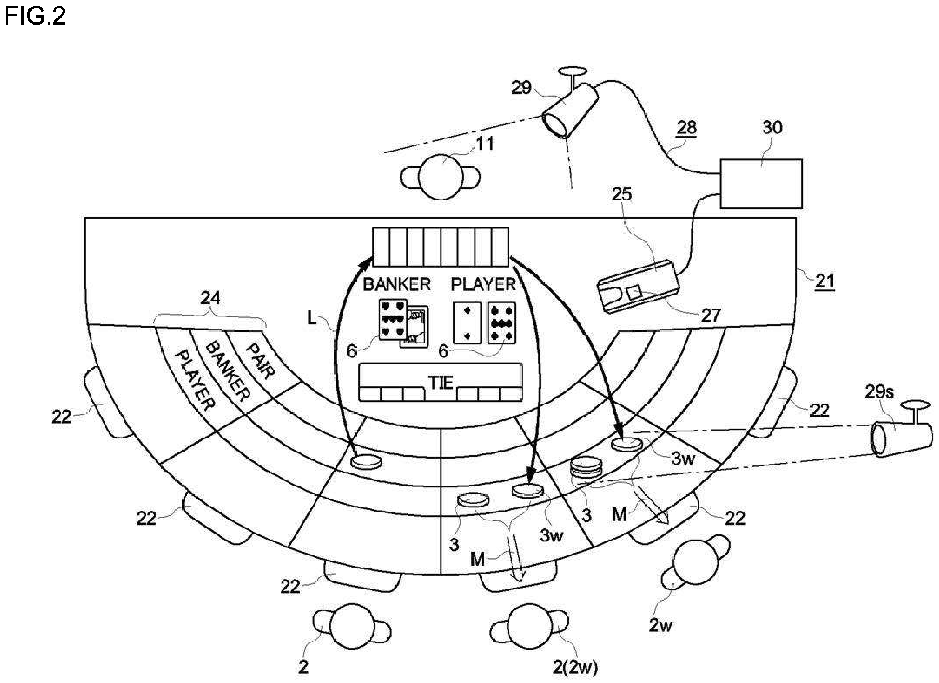

   Fig. 2 is a diagram schematically showing the entirety of a table game system according to an embodiment 2 of the present invention.

### [Description of Embodiments]

Embodiment 1 of the present invention will be described with reference to the attached drawings. Embodiment 1 of the present invention provides a card game monitoring system for playing Black Jack. In Fig. 1, the card game monitoring system has: a game table 1 on which bettors 2 make wagers by putting wagers 3 on betting areas 4; a card shooter apparatus that is put on the game table 1 and has a card reading unit that reads the number (rank) and suit of the cards 6 and having a control unit 7 to determine a winning hand according to a table game rule based on information of numbers (ranks) of the cards sequentially read by the card reading unit 5.

A monitor video camera system 8 which has several cameras 9 is set above each game table 1 to capture the positions of cards 6 delivered from the card shooter apparatus 5 to bettors 2. The monitor video camera system 8 identifies wagers 3 on each betting area 4 at the game table 1, the control unit 10 has a processing function using the information of the monitor video cameras 9 to determine the following:
1) head-count of the bettors playing on each game by identifying the positions of wagers on each betting area or cards delivered to each bettor 2 (three persons (heads) shown in fig.1) ,
2) number of cards delivered for each bettor 2 by dealer 11 from the card shooter apparatus 5 (whether or not each bettor 2 gets more than two cards).

The control unit 10 has further processing function using information from the monitor video cameras 9 to determine each hand of the bettors 2 and the dealer 11 according to the information read by the card shooter apparatus 5 using the information of the results of head-counting of the bettors 2 and according to the game rules installed in the control unit 7 of the card shooter apparatus 5. Then the control unit 7 will determine the winner W having the winning hand on the game based on the information of the hands of the bettors 2 and the dealer 11.

Wherein the card shooter apparatus 5 knows directions of each card (who gets each card read by the card shooter apparatus 5 through the monitor video camera system 8) and then the card shooter apparatus 5 (the control unit 7) will figure out by its programs the hands held by the bettors 2 and the dealer 11. The control unit 10 has further a processing function to check whether wagers 3 with payoffs 3W move to a pool 12 of the winner 2W of the bettors 2 determined by the card shooter apparatus 5 at the end of each game (the movement M for the winners and L for loser in fig.1).

The monitor video camera system 8 (with the control unit 10) has further processing function that identify ranks of playing cards 6 by analyzing pictures from the monitor video cameras 9 to determine each hand (number) of the bettors 2 on the game table delivered by a dealer 11 and checks whether suits and ranks of cards 6 are the same as the ones read and determined by the card shooter apparatus 5.

The monitor video camera system 8 (the control unit 10 ) has further processing function that identifies total amounts of wagers 3 by counting chips on each betting area 4 of the bettors 2. Each total amount of wagers 3 are calculated by analyzing pictures from the monitor video cameras 9 of its colors and its height of chips on each betting areas 4. Special video cameras 9s for this purpose may be put around the game table 1 to take side views of the chips of wagers 3.

Fig. 2 shows an example of Embodiment 2 of the present invention. Embodiment 2 of the present invention provides a card game monitoring system for playing game (Baccarat). In Fig. 2, the card game monitoring system has: a game table 21 on which bettors 2 make wagers by putting wagers 3 on betting areas 24; a card shooter apparatus 25 that is put on the game table 21 and has a card reading unit that reads the number (rank) and suit of the cards 6 and having a control unit 27 to determine a winning hand according to a table game rule based on information of numbers (ranks) of the cards 6 sequentially read by the card shooter apparatus 25.

A monitor video camera system 28 reads cards and movements of the wagers 3 on the game table. The control unit 27 of the card shooter apparatus 25 has processing functions to determine whether the winning hand is the Banker or the Player based on information of numbers (ranks) of the cards read by the a card shooter apparatus 25 and Baccarat game rule in the control unit 27. A control unit 30 of the card game monitoring system having processing function to check whether wagers 3 with payoffs 3W move to a pool 22 of the winners 2W of the bettors 2 after each game has ended.

Wherein the card shooter apparatus 25 knows that place (Banker or Player) to which each card is delivered according to the game rule of Baccarat and then the card shooter apparatus 25 (with the control unit 27) will calculate each hand of Banker and Player. In this way the card shooter apparatus 25 determines whether a winning hand is the Banker or the Player. The control unit 30 has a further processing function to check whether wagers 3 with payoffs 3W move to a pool 22 of the winner 2W of the bettors 2 determined by the card shooter apparatus 25 at the end of each game (the movement M for the winners and L for loser movement M in fig.2).

The monitor video camera system 28 (with the control unit 30) has further processing function that identify ranks of playing cards 6 on the game table 21 delivered by a dealer 11 by analyzing pictures obtained from the monitor video cameras 29. This card game monitoring system checks whether suits and ranks of cards 6 are the same as the ones read and determined by the card shooter apparatus 25 and reports to an administration section of the casino the results of whether the suits and ranks of cards 6 are the same as those delivered and read by the card shooter apparatus 25.

The monitor video camera system 28 (the control unit 30 ) has further processing function that identify total amounts of wagers 3 by counting chips on each betting area 24 of the bettors 2. Each total amount of wagers 3 is calculated by analyzing pictures from the monitor video cameras 29 of its colors and its height of chips on each betting areas 24. Special video cameras 29s for this purpose may be put around the game table 21 to take side views of the chips of wagers 3.

In both examples of Embodiment 1 and 2 the monitor video camera system 8 and 28 can identify positions of wagers 3, the total amount of wagers 3 of its colors and its height of chips on each betting areas 4 and 24 by analyzing pictures taken by the video cameras 9, 9s, 29 and 29s using CCD and through known technology of vision analysis. The monitor video camera system 8 and 28 can also identify positions of cards 3 and analyze the faces of cards showing in betting.

Throughout this specification and the claims which follow, unless the context requires otherwise, the word "comprise", and variations such as "comprises" and "comprising", will be understood to imply the inclusion of a stated integer or step or group of integers or steps but not the exclusion of any other integer or step or group of integers or steps.

### [Annex 1]

The card game monitoring system mentioned above, the card shooter apparatus has further determination function of the card games when each game starts and ends according to the rules of Baccarat or Black Jack with monitoring video camera system.

### [Annex 2]

The card game monitoring system mentioned above, the control unit has further processing function to check whether wagers do not move from the original betting position to the other area during the each game starts and ends (during each game).

### [Annex 3]

The card game monitoring system mentioned above, the control unit has a determination function to determine when the betting starts before the start of each game (the betting start indicates the time the first bet is put on the betting area).

### [Annex 4]

The card game monitoring system mentioned above, the control unit has a determination function to determine when the betting ends before the start of each game (the betting end indicates the time the first card is delivered from the card shooter apparatus). Also the control unit has a processing function using the information from the monitor video camera system to determine the movement of the dealer's hand representing the end of betting called "No more bet".

### [Annex 5]

The card game monitoring system mentioned above, the control unit has a determination function to determine when the payoff has completed after the end of each game.

### [Annex 6]

The card game monitoring system mentioned above, the control unit has a transmitting function to transmit the information of the monitor video camera to a backyard in casino.

### [Annex 7]

The card game monitoring system mentioned above, the control unit has a determination function to determine an error, and the card game monitoring system further has an output means to output an error signal by displaying and/or alarming in the card shooter apparatus and/or the related system components incorporated in the card game monitoring system as a result of the determination of the error. The error mentioned above includes at least one of the following items.
1) The ranks of playing cards identified by the card game monitoring system on the game table delivered by the dealer are not same as the ones determined by the card shooter apparatus.
2) Wagers have moved from the original betting position to other areas during each game.
3) Wagers with payoffs have not moved to the winners of the bettors at the end of each game.

### [Annex 8]

The card game monitoring system mentioned above, the control unit has a determination function to identify a cut card delivered from the card shooter apparatus.

## Claims

1. A card game monitoring system for playing a table game,
having:
a game table on which bettors make wagers by putting wagers on betting areas,
a card shooter apparatus that is put on the game table and has a card reading unit that reads the number (rank) of a card and having a control unit to determine a winning hand according to a table game rule based on information of numbers of the cards sequentially read by the card reading unit,
and
a monitor video camera system to capture positions of the cards delivered from the card shooter apparatus to bettors and to identify wagers on each betting area at the game table,
the control unit has a processing function using the information of the monitor video camera system to determine:
1) head-count of the bettors playing at each game by identifying the wager on each betting area or cards delivered to each bettor,
2) whether or not each bettor gets more than two cards from the card shooter apparatus,
3) each hand of the bettors and the dealer according to the information read by the card shooter apparatus with using the information of head-count of the bettors according to the game rule, and
4) winner(s) having the winning hand(s) in the game according to the game rule based on the information of the each hand of the bettors and the dealer.

2. The card game monitoring system according to Claim 1, wherein the control unit has further processing function to identify ranks of playing cards on the game table delivered by the dealer and to check and report whether ranks of cards are same as the ones determined by the card shooter apparatus.

3. The card game monitoring system according to Claim 1, wherein the card shooter apparatus has further a determination function of when each game starts and ends.

4. The card game monitoring system according to Claim 3, wherein the control unit has further processing function to check whether wagers do not move from the original betting position to other areas during each game.

5. A card game monitoring system for a game,
having:
a game table on which bettors make wagers by putting wagers on betting areas either Banker hand or Player hand that will win,
a card shooter apparatus that is put on the game table and has a card identifying function that reads the number of the card when the card is being delivered on the table,
a monitor video camera system to capture cards and movements of the wagers on the game table, and
a control unit having a processing function of determining whether a winning hand is the Banker or the Player according to a game rule with information of numbers of the cards read by the a card shooter apparatus,
wherein
the control unit has a processing function to check whether wagers with payoffs move to the winners of the bettors after each game has ended.

6. The card game monitoring system according to Claim 5, wherein the control unit has further processing function to identify ranks of playing cards on the game table delivered by the dealer and to check and report whether ranks of cards are the same as the ones determined by the card shooter apparatus.

7. The card game monitoring system according to Claim 5, wherein the card shooter apparatus has a further determination function of when each game starts and ends.

8. The card game monitoring system according to Claim 7, wherein the control unit has a further processing function to check whether wagers do not move from the original betting position to the other area during each game.

9. The card game monitoring system according to Claim 1,
wherein
the monitor video camera system further reads directions of movements of wagers on the game table, and
the control unit has further processing function to check whether wagers with payoffs move to the winners of the bettors determined by the card shooter apparatus at the end of each game.
